(19) Europäisches Patentamt
European Patent Office
Office européen des brevets

(11) **EP 1 037 408 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(51) Int Cl.:
***H04B 10/00*** *(2006.01)*   ***H04B 10/207*** *(2006.01)*

(21) Anmeldenummer: **00105603.5**

(22) Anmeldetag: **16.03.2000**

(54) **Fernkonfigurierbares optisches Kommunikationsnetz**

Remotely configurable optical communication network

Réseau de communication optique configurable à distance

(84) Benannte Vertragsstaaten:
**DE FR GB IT**

(30) Priorität: **17.03.1999 DE 19911957**

(43) Veröffentlichungstag der Anmeldung:
**20.09.2000 Patentblatt 2000/38**

(73) Patentinhaber: **SIEMENS AKTIENGESELLSCHAFT**
**80333 München (DE)**

(72) Erfinder: **Jäger, Hubert, Dr.**
**82049 Pullach (DE)**

(56) Entgegenhaltungen:
**DE-A- 19 648 073**

- **CONLISK J K: "Topology and survivability of future transport networks" GLOBECOM 89, IEEE GLOBAL TELECOMMUNICATIONS CONFERENCE AND EXHIBITION, 27. November 1989 (1989-11-27), Seiten 826-834, XP010083929 NEW YORK, USA**
- **BERTHELON L ET AL: "Towards photonic networking: Experimental demonstration of a reconfigurable survivable WDM ring network" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18. November 1996 (1996-11-18), Seiten 311-315, XP010220371 ISBN: 0-7803-3336-5**

## EP 1 037 408 B1

## Beschreibung

In rein optischen Kommunikationsnetzen, insbesondere WDM-Kommunikationsnetzen (WDM = "Wavelength Division Multiplexing") werden Datenübertragungskanäle mit unterschiedlichen Wellenlängen zur Herstellung von Datenverbindungen genutzt. Auf Wunsch von Netzkunden sollen von Netzbetreibern optische, logische Verbindungen zwischen beliebigen Anschlußpunkten innerhalb des Kommunikationsnetzes beispielsweise kurzzeitig zur Verfügung gestellt werden. Somit weist ein Teil der in einem optischen Kommunikationsnetz bestehenden optischen Verbindungen statischen Charakter und ein weiterer Teil eine nur kurze Lebensdauer auf. Zur Erstellung derartig kurzzeitiger optischer Verbindungen wurden bisher elektronisch arbeitende Cross-Connectoren bzw. Durchschalteeinrichtungen verwendet, wobei insbesondere zukünftig zur Ausnutzung der vorhanden Netzwerkkapazitäten automatisch fernkonfigurierbare optische Durchschalteeinrichtungen - auch Add-Drop-Multiplexer genannt - in den jeweiligen Konzentrationspunkten des Kommunikationsnetzes vorgesehen sind. Die Verwendung dieser fernkonfigurierbaren optischen Durchschalteeinrichtungen ist jedoch sehr kostenintensiv und erfordert einen hohen Wartungsaufwand.

Desweiteren wird beim Aufbau einer optischen Hin-/Rückverbindung in optischen Kommunikationsnetzen aus Gründen der Sicherheit des Kommunikationsnetzes darauf geachtet, daß die optische Hin-/Rückverbindung und die entsprechende optische "Protection"-Hin-/Rückverbindungen in unterschiedlichen, über räumlich getrennt verlaufende, geographische Verbindungspfade geführte, optische Fasern aufgebaut werden. Somit ist im Falle eines Faserbruches sichergestellt, daß eine zuverlässige Ersatzverbindung für die Datenübertragung zur Verfügung steht.

Insbesondere wird von einzelnen Netzkunden gefordert, daß in eine Doppelsterntopologie aufweisenden Kommunikationsnetzen optische, nur für eine kurze zeitliche Dauer vorgesehene Hin-/Rückverbindungen und die zusätzlichen optischen Protection Hin-/Rückverbindungen automatisch und von einem vom Anschlußpunkt entfernten Steuerungspunkt auf- bzw. abgebaut werden können.

Bei bekannten optischen Netzarchitekturen sind zu diesem Zwecke sowohl an beiden "Sternpunkt"-Netzknoten als auch an weiteren Netzknoten des optischen Kommunikationsnetzes fernkonfigurierbare Durchschalteeinrichtungen vorgesehen, wobei die Netzknoten an zwischen den einzelnen geographischen Verbindungspfaden befindlichen Konzentrationspunkten angeschlossen sind. Durch die Vielzahl dieser an den Netzknoten vorgesehenen fernkonfigurierbaren Durchschalteeinrichtungen ergibt sich eine hohe Komplexität des optischen Kommunikationsnetzes, die insbesondere zu einem erhöhten Erstellungsaufwand und einer geringeren Zuverlässigkeit des Kommunikationsnetzes beiträgt. Zusätzlich ist bei einer optisch transparenten Realisierung des Kommunikationsnetzes eine optische Leistungsregelung zum Anpassen der Leistung des in dem jeweiligen Netzknoten empfangenen optischen Signals zusätzlich zu der fernkonfigurierbaren Durchschalteeinrichtung vorzusehen. Dies führt erneut zu einer Steigerung der Komplexität des Gesamtsystems und zu einer erheblichen Steigerung des Erstellungsaufwandes für das optische fernkonfigurierbare Kommunikationsnetz.

Aus dem Stand der Technik sind ähnliche Kommunikationsnetze aus folgenden Veröffentlichungen bekannnt:

CONLISK J K: "Topology and survivability of future transport networks" GLOBECOM 89, IEEE GLOBAL TELECOMMUNICATIONS CONFERENCE AND EXHIBITION, 27. November 1989 (1989-11-27), Seiten 826-834, XP010083929 NEW YORK, USA,

BERTHELON L ET AL: "Towards photonic networking: Experimental demonstration of a reconfigurable survivable WDM ring network" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18. November 1996 (1996-11-18), Seiten 311-315, XP010220371 ISBN: 0-7803-3336-5, oder

DE 196 48 073.

Die der Erfindung zugrundeliegende Aufgabe besteht nun darin, ein fernkonfigurierbares optisches Kommunikationsnetz derartig auszugestalten, daß lediglich an den beiden "Sternpunkt"-Netzknoten des Kommunikationsnetzes fernkonfigurierbare Durchschalteeinrichtungen vorzusehen sind um für alle im Netzwerk geplanten, zwischen den einzelnen Netzknoten vorgesehenen logischen Verbindungen zumindest zwei geographisch getrennt verlaufende logische Verbindungspfade sicherzustellen. Die Aufgabe wird ausgehend von einem fernkonfigurierbaren, optischen Kommunikationsnetz gemäß den Merkmalen des Patentanspruches 1 gelöst.

Der wesentliche Aspekt des erfindungsgemäßen, fernkonfigurierbaren optischen Kommunikationsnetzes ist darin zu sehen, daß in dem zumindest zwei "Sternpunkt"-Netzknoten und mehrere jeweils an die zumindest zwei "Sternpunkt"-Netzknoten über logische Verbindungen angeschlossenen Netzknoten aufweisenden fernkonfigurierbaren optischen Kommunikationsnetz logische Verbindungen durch festgelegte, jeweils zumindest einen Verbindungsabschnittspfad enthaltende Verbindungspfade realisiert sind. Desweiteren sind für jede logische Verbindung ein über den "Sternpunkt"-Netzknoten geführter Arbeits-Verbindungspfad und ein geographisch unterschiedlicher, über den weiteren "Sternpunkt"-Netzknoten geführter Ersatz-Verbindungspfad realisiert und optische Durchschaltemittel zum Durchschalten der logischen Verbindungen jeweils über den Arbeits- und Ersatz-Verbindungspfad zwischen den jeweiligen Netzknoten in den "Sternpunkt"-Netzknoten vorgesehen. Vorteilhaft werden für jede bestehende bzw. geplanten logische Verbindung zwischen zwei Netzknoten jeweils ein für eine aktive Verbindungsfaser vorgesehener Arbeits-Verbindungspfad und ein geographisch unterschiedlicher geführter, für eine redundante Verbindungsfaser vorgesehener Ersatz-Verbindungspfad für die Übertragung optischer Signale benutzt, wobei der für die aktive Verbindungsfaser vorgesehene Arbeits-Verbindungspfad über einen ersten "Sternpunkt"-Netzknoten und der für die redundante Verbindungsfaser vorgesehene Ersatz-Verbindungspfad über einen zweiten "Sternpunkt"-Netzknoten geführt wird. Eine derartige Zuordnung der für die aktive und redundante Datenübertragung vorgesehenen Verbindungspfade und die Verbindung jedes Netzknotens über logische Verbindungen mit einem der "Sternpunkt"-Netzknoten ermöglicht es nun mit Hilfe von in den "Sternpunkt"-Netzknoten angebrachten optischen fernkonfigurierbaren Durchschalteeinrichtungen - optische Durchschaltemittel- die für die Hin-/Rückverbindungen vorgesehenen Verbindungspfade im "Sternpunkt"-Netzknoten neu zu konfigurieren bzw. Verbindungspfade durchzuschalten oder wieder zu trennen. Somit werden keine fernkonfigurierbaren Durchschalteeinrichtungen in den jeweiligen Netzknoten mehr benötigt um die einzelnen Netzknoten eines optischen Kommunikationsnetzes gemäß ihrer logischen Verbindungen derart miteinander zu verbinden, daß jeweils zwei räumlich getrennt verlaufenden Verbindungspfade für eine aktive und eine redundante Datenübertragung zur Verfügung stehen. Desweiteren entfällt die kostenintensive Bereitstellung von optischen Leistungsregelungen in den einzelnen Netzknoten und es ergibt sich auf vorteilhafte Weise eine Reduzierung der Komplexität des Kommunikationsnetzes aufgrund der vorteilhafteren Konfiguration des Kommunikationsnetzes. Desweiteren bestehen Verbindungspfade üblicherweise aus mehreren Verbindungspfadabschnitten, die häufig in der Fachwelt als "Ducts" (Schächte) bezeichnet werden. Dabei sind unter dem Begriff "Ducts" Schächte zu verstehen in denen optische Fasern von einem optischen Add-Drop-Multiplexer zu einem weiteren optischen Add-Drop-Multiplexer geführt werden. Beim erfindungsgemäßen fernkonfigurierbaren optischen Kommunikationsnetz wird eine Mehrfachbenutzung eines Schachtes für den Arbeits- und den Ersatz-Verbindungspfad vermieden und dadurch der Ausfall der logischen Verbindung im Falle eines optischen Faserbruchs vermieden.

Somit stellt das erfindungsgemäße fernkonfigurierbare optische Kommunikationsnetz ein hinsichtlich der Ausnutzung der vorhandenen bzw. geplanten Verbindungspfade optimiertes optisches Kommunikationsnetz dar, bei dem ohne Zuhilfenahme von zusätzlichen in den einzelnen Netzknoten vorgesehenen fernkonfigurierbaren Durchschalteeinrichtungen ein äußerst flexibles Durchschalten von kurzzeitigen Verbindungen mit 1+1 Leitungsschutz über zwei räumlich getrennt geführte Verbindungspfade möglich wird.

Nach einer weiteren Ausgestaltung des erfindungsgemäßen fernkonfigurierbaren, optischen Kommunikationsnetzes ist eine Rechnereinheit zum Bilden einer die erwartenden Datenverkehrsbeziehungen zwischen den einzelnen Netzknoten repräsentierenden Datenverkehrsbeziehungsinformation und zum Ermitteln der über den "Sternpunkt"-Netzknoten geführten Arbeits-Verbindungspfade vorgesehen. Desweiteren ist die Rechnereinheit zum Ermitteln der geographisch unterschiedlich, über den weiteren "Sternpunkt"-Netzknoten geführten Ersatz-Verbindungspfade und zum Bilden einer Verbindungspfadinformation vorgesehen. Vorteilhaft wird die für die Planung des erfindungsgemäßen fernkonfigurierbaren optischen Kommunikationsnetzes benötigte Datenverkehrsbeziehungsinformation in Form einer Korrelationsmatrix in der Rechnereinheit gebildet, wobei durch deren Elemente eindeutig festgelegt ist, zwischen welchen im Kommunikationsnetz befindlichen Netzknoten eine logische Verbindung geplant ist und für welche Netzknoten keine logische Verbindung untereinander vorgesehen sind. Desweiteren werden in der Rechnereinheit die für die geplanten logischen Verbindungen zwischen den Netzknoten vorgesehenen Arbeits-Verbindungspfade und Ersatz-Verbindungspfade ermittelt und daraus eine Verbindungspfadinformation gebildet. Die in der Rechnereinheit berechneten Informationen werden für die optimale Konfigurierung des erfindungsgemäßen optischen Kommunikationsnetzes hinsichtlich der optimalen Ausnutzung der vorhandenen Verbindungspfadressourcen benutzt.

Weitere vorteilhafte Ausgestaltungen der Erfindung sind den weiteren Ansprüchen zu entnehmen.

Im folgenden wird das erfindungsgemäße Verfahren anhand von zwei Prinzipschaltbildern, einer Tabelle und einem Ablaufdiagramm näher erläutert.

Fig. 1    zeigt in einem Prinzipschaltbild die logische Struktur des fernkonfigurierbaren optischen Kommunikationsnetzes

Fig. 2    zeigt in einem Prinzipschaltbild das fernkonfigurierbare optische Kommunikationsnetz

Fig. 3    zeigt in einer Tabelle die die geplanten Verkehrsbeziehungen repräsentierende Korrelationsmatrix

Fig. 4    zeigt ein Ablaufdiagramm der in der Rechnereinheit ausgeführten Bewertungsroutine

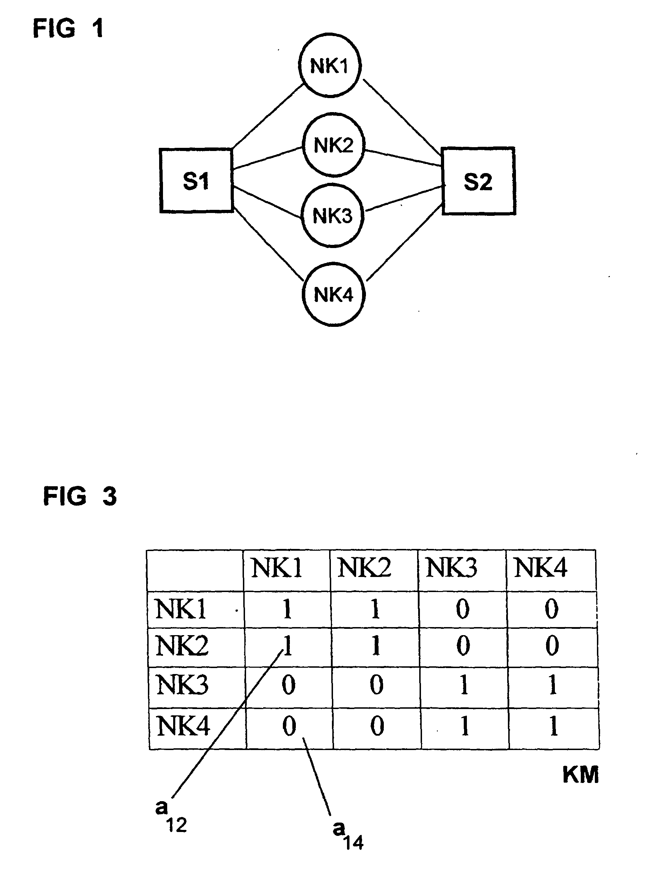

In Figur 1 ist die dem fernkonfigurierbaren optischen Kommunikationsnetz FOK zugrundeliegende logische Struktur schematisch dargestellt. Hierzu sind beispielsweise ein erster, ein zweiter, ein dritter und ein vierter Netzknoten NK1,...,NK4 einer Vielzahl von möglichen Netzknoten dargestellt, wobei jeder der vier Netzknoten NK1,...,NK4 einen Teil einer nicht in Figur 1 dargestellten optischen Kommunikationseinrichtung eines Netzkunden repräsentiert. Der erste, zweite, dritte und vierte Netzknoten NK1,...,NK4 sind über logische Verbindungen LV jeweils mit einem ersten und einem zweiten "Sternpunkt"-Netzknoten S1,S2 verbunden, wobei an den ersten und zweiten "Sternpunkt"-Netzknoten S1,S2 direkt keine optischen Kommunikationseinrichtungen von Netzkunden angeschlossen sind. Die dargestellten logischen Verbindungen sind beispielhaft und lassen keinen Schluß auf den realen Verlauf der optischen Fasern OF im fernkonfigurierbaren optischen Kommunikationsnetz FOK zu.

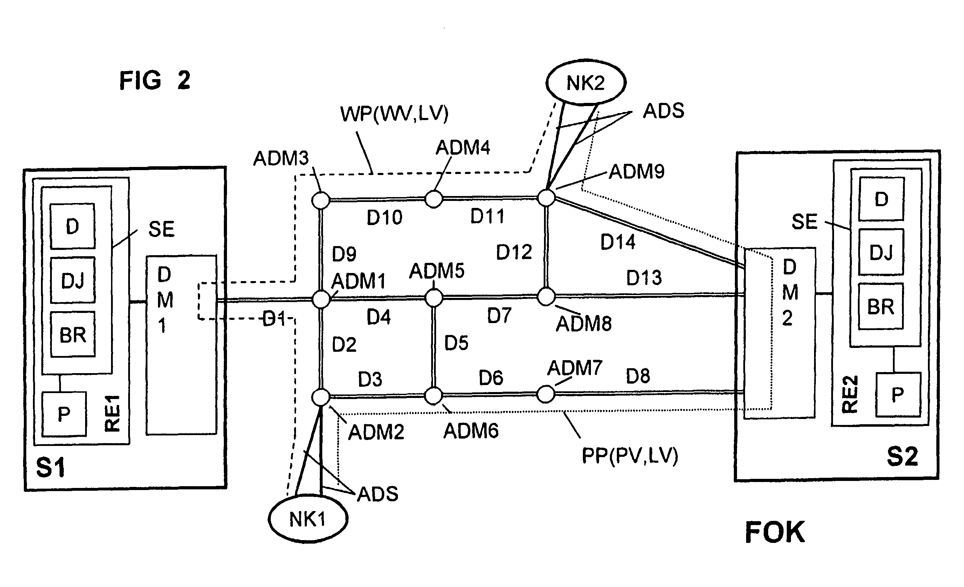

In Figur 2 ist der Aufbau des fernkonfigurierbaren optischen Kommunikationsnetzes FOK schematisch dargestellt. Analog zu Figur 1 sind der erste und der zweite "Sternpunkt"-Netzknoten S1,S2 und der erste und zweite Netzknoten S1,S2 dargestellt, wobei zusätzlich ein erster, zweiter, dritter, vierter, fünfter, sechster, siebter, achter und neunter Add-Drop-Multiplexer ADM1,...,ADM9 zum Anschluß von Netzknoten NK1,...,NK4 an das fernkonfigurierbare optische Kommunikationsnetz FOK vorgesehen sind. In anderen Ausführungsformen des erfindungsgemäßen fernkonfigurierbaren Kommunikationsnetzes FOK ist es auch beispielsweise realisierbar, daß sowohl der erste als auch der zweite "Sternpunkt"-Netzknoten S1,S2 am selben geographischen Ort bzw. in einem gemeinsamen Gebäude vorgesehen sind. Beispielhaft sind in Figur 2 der erste und der zweite Netzknoten NK1,NK2 über optische Add-Drop-Anschlüsse ADS jeweils an optische Add-Drop-Multiplexer ADM2/9 angeschlossen, wobei der erste Netzknoten NK1 an den zweiten Add-Drop-Multiplexer ADM2 und der zweite Netzknoten NK2 an den neunten Add-Drop-Multiplexer ADM9 angeschlossen ist. Der Anschluß des ersten oder des zweiten Netzknoten NK1,NK2 an das fernkonfigurierbare optische Kommunikationsnetz FOK kann auch über zwei Add-Drop-Anschluß ADS an zwei unterschiedliche Add-Drop-Multiplexer ADM1,...,ADM9 erfolgen, d.h. beispielsweise kann der erste Netzknoten NK1 über einen aktiven Add-Drop-Anschluß ADS mit dem zweiten Add-Drop-Multiplexer ADM2 und mit einem weiteren redundanten Add-Drop-Anschluß ADS mit dem sechsten Add-Drop-Multiplexer ADM6 verbunden werden. Dadurch wird eine sogenannte "Dual Homing"-Protection für den Anschluß eines Netzknoten NK1,...,NK4 von Netzkunden ermöglicht. Für die geographische Führung der optischen Fasern OF - in Figur 2 aus Gründen der Übersichtlichkeit nicht explizit dargestellt - sind ein erster, zweiter, dritter, vierter, fünfter, sechster, siebter, achter, neunter, zehnter, elfter, zwölfter, dreizehnter und vierzehnter Leitungsschacht bzw. Verbindungspfadabschnitt D1,...,D14 vorgesehen, in denen beispielsweise die gesamten optischen Fasern OF des fernkonfigurierbaren optischen Kommunikationsnetzes FOK verlegt werden können. Die Anzahl der Verbindungspfadabschnitte D1,...,D14 ist in Figur 2 aus Gründen der Übersichtlichkeit gering gehalten und ist bei praktisch realisierten optischen Kommunikationsnetzen FOK bedeutend größer.

Zwischen den einzelnen Add-Drop-Multiplexern ADM1,...,ADM9 liegt jeweils ein einzelner Verbindungspfadabschnitt D1,...,D14, wobei zwischen dem ersten "Sternpunkt"-Netzknoten S1 und dem ersten Add-Drop-Multiplexer ADM1 der erste Verbindungspfadabschnitt D1, zwischen dem ersten und dem zweiten Add-Drop-Multiplexer ADM1,ADM2 der zweite Verbindungspfadabschnitt D2, zwischen dem ersten und dem dritten Add-Drop-Multiplexer ADM1,ADM3 der neunte Verbindungspfadabschnitt D9 und zwischen dem ersten und dem fünften Add-Drop-Multiplexer ADM1,ADM5 der vierte Verbindungspfadabschnitt D4 liegt. Desweiteren ist zwischen dem zweiten und dem sechsten Add-Drop-Multiplexer ADM2,ADM6 der dritte Verbindungspfadabschnitt D3, zwischen dem fünften und dem sechsten Add-Drop-Multiplexer ADM5,ADM6 der fünfte Verbindungspfadabschnitt D5 und zwischen dem sechsten und dem siebten Add-Drop-Multiplexer ADM6,ADM7 der sechste Verbindungspfadabschnitt D6 vorgesehen. Der siebte Add-Drop-Multiplexer ADM7 ist über den achten Verbindungspfadabschnitt D8, der achte Add-Drop-Multiplexer ADM8 über den dreizehnten Verbindungspfadabschnitt D13 und der neunte Add-Drop-Multiplexer ADM9 über den vierzehnten Verbindungspfadabschnitt D14 mit dem zweiten "Sternpunkt"-Netzknoten S2 verbunden. Desweiteren ist zwischen dem dritten und dem vierten Add-Drop-Multiplexer ADM3,ADM4 der zehnte Verbindungspfadabschnitt D10, zwischen dem vierten und dem neunten Add-Drop-Multiplexer ADM4,ADM9 der elfte Verbindungspfadabschnitt D11, zwischen dem fünften und dem achten Add-Drop-Multiplexer ADM5,ADM8 der siebte Verbindungspfadabschnitt D7 und zwischen dem achten und dem neunten Add-Drop-Multiplexer ADM8,ADM9 der zwölfte Verbindungspfadabschnitt D12 vorgesehen.

Im ersten "Sternpunkt"-Netzknoten S1 sind erste optische Durchschaltemittel DM1 zum Durchschalten von logischen Verbindungen LV über Verbindungspfade WP,PP vorgesehen, wobei die ersten optischen Durchschaltemittel DM1 mit einer ersten Rechnereinheit RE1 verbunden sind. Analog dazu sind im zweiten "Sternpunkt"-Netzknoten S2 zweite optische Durchschaltemittel DM2 zum Durchschalten von logischen Verbindungen LV über Verbindungspfade WP,PP vorgesehen, an die eine zweite Rechnereinheit RE2 angeschlossen ist.

Im erfindungsgemäßen fernkonfigurierbaren optischen Kommunikationsnetz FOK wird beispielsweise eine logische Verbindung LV zwischen dem ersten und dem zweiten Netzknoten NK1,NK2 über zwei über unterschiedliche Verbindungspfadabschnitte D1,...,D14 geführte Verbindungspfade WP,PP aufgebaut. Hierzu wird eine logische "Working"-Verbindung WV über einen Arbeits-Verbindungspfad WP und eine logische "Protection"-Verbindung PV über einen Ersatz-Verbindungspfad PP aufgebaut, wobei die logische "Working"-Verbindung WV mit Hilfe der ersten optischen Durchschaltemittel DM1 des ersten "Sternpunkt"-Netzknotens S1 und die logische "Protection"-Verbindung PV mit Hilfe der zweiten optischen Durchschaltemittel DM2 des zweiten "Sternpunkt"-Netzknotens S2 durchgeschaltet werden. Der Arbeits-Verbindungspfad WP wird aus dem zweiten, ersten, neunten, zehnten und den elften Verbindungspfadabschnitten D2,D1,D9,D10,D11 gebildet, wobei die logische "Working"-Verbindung WV somit auch über den ersten, dritten und vierten Add-Drop-Multiplexer ADM1,3,4 geführt wird, wobei der erste Verbindungspfadabschnitt D1 mit den ersten optischen Durchschaltemitteln DM1 des ersten "Sternpunkt"-Netzknotens S1 verbunden ist und als Teil des Arbeits-Verbindungspfad WP mehrfach benutzt wird. Im Gegensatz dazu wird der Ersatz-Verbindungspfad PP aus dem dritten, sechsten, achten und vierzehnten Verbindungspfadabschnitt D3,D6,D8,D14 gebildet und verläuft über den sechsten und siebten Add-Drop-Multiplexer ADM6,7, wobei der achte und vierzehnte Verbindungspfadabschnitt D6,D14 über die zweiten optischen Durchschaltemittel DM2 des zweiten "Sternpunkt"-Netzknotens S2 verbunden sind. In Figur 2 ist anhand einer strichlierten Linie der prinzipielle Verlauf des Arbeits-Verbindungspfades WP und anhand einer punktierten Linie der Verlauf des Ersatz-Verbindungspfades PP im fernkonfigurierbaren optischen Kommunikationsnetz FOK angedeutet.

Desweiteren wird die erste Rechnereinheit RE1 des ersten "Sternpunkt"-Netzknotens S1 in einem aktiven Betriebsmodus und die zweite Rechnereinheit RE2 des zweiten "Sternpunkt"-Netzknotens S2 in einem redundanten Betriebsmodus betrieben, d.h. tritt eine Funktionsstörung der ersten Rechnereinheit RE1 auf, so kann auf die zweite Rechnereinheit RE2 umgeschaltet werden. Im weiteren wird die Funktionsweise der ersten Rechnereinheit RE1 näher erläutert, da die zweite Rechnereinheit RE2 einen analogen Aufbau sowie eine analoge Funktionsweise aufweist. Die in Figur 2 dargestellte integrierte Anordnung der ersten und zweiten Rechnereinheit RE1,RE2 im ersten bzw. zweiten "Sternpunkt"-Netzknoten S1,S2 ist nur beispielhaft, d.h. die erste und zweite Rechnereinheit RE1,RE2 könnten auch an einem unabhängig vom fernkonfigurierbaren optischen Kommunikationsnetz FOK gewählten Ort vorgesehen sein. Im weiteren sind die ersten und zweiten optischen Durchschaltemittel fernkonfigurierbar, d.h. sie können von einem geographisch entfernten Ort aus gesteuert werden. In dem in Figur 2 dargestellten Fall werden die ersten und die zweiten optischen Durchschaltemittel DM1,DM2 von der ersten Rechnereinheit RE1 über das fernkonfigurierbare optische Kommunikationsnetz FOK ferngesteuert bzw. fernkonfiguriert. Zur Ermittlung der für die Durchschaltung der einzelnen logischen Verbindungen LV notwendigen Informationen ist in der ersten Rechnereinheit RE1 eine in einer Speichereinheit SE gespeicherte Bewertungsroutine BR vorgesehen. Die zweite Rechnereinheit RE2 weist einen analogen Aufbau auf. Zusätzlich ist eine in der ersten Rechnereinheit gebildete Datenverkehrsbeziehungsinformation DJ in Form einer Korrelationsmatrix KM und ein Verbindungsabschnittspfadvektor D in der Speichereinheit SE gespeichert. Mit Hilfe der Korrelationsmatrix KM werden die für dieses fernkonfigurierbare optische Kommunikationsnetz FOK erwarteten Verkehrsbeziehungen zwischen den angeschlossen Kommunikationseinrichtungen der Netzkunden - d.h. den ersten, zweiten, dritten und vierten Netzknoten NK1,...,Nk4 - erfaßt. Der Verbindungspfadabschnittsvektor D enthält als Elemente die einzelnen Verbindungspfadabschnitte D1,...,D14, die für die Ermittlung eines Verbindungspfades WP,PP innerhalb des fernkonfigurierbaren optischen Kommunikationsnetzes FOK zur Verfügung stehen, wobei sich der Verbindungspfadabschnittsvektor D für das in Figur 2 dargestellte optische Kommunikationsnetz beispielsweise zu D= (D1, D2, D3, D4, D5, D6, D7, D8, D9, D10, D11, D12, D13, D14)$^T$ ergibt.

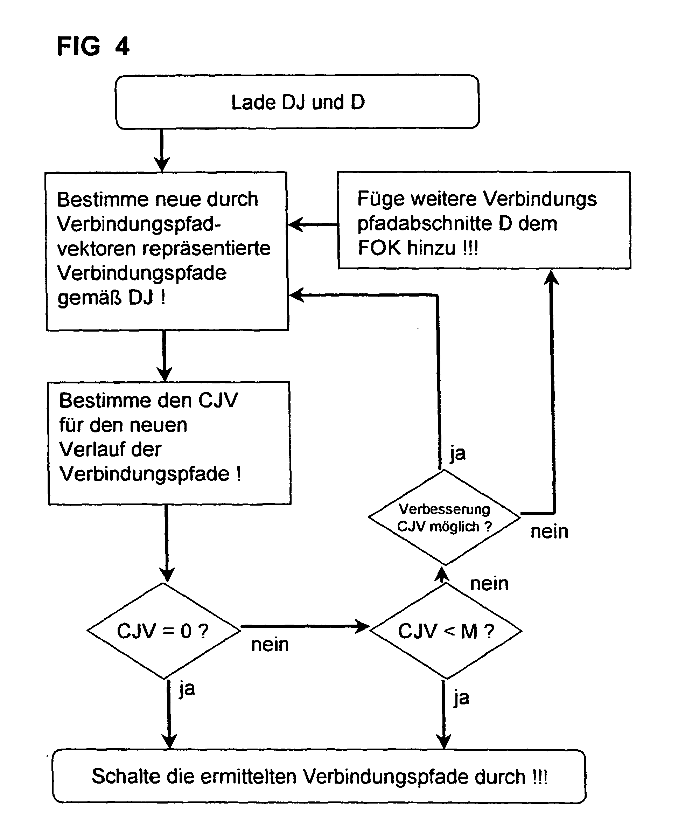

So ist in Figur 3 anhand einer Tabelle beispielsweise eine von einer Vielzahl von möglichen, die geplanten Verkehrsbeziehungen bzw. logischen Verbindungen LV zwischen der an den ersten, zweiten, dritten und vierten Netzknoten NK1,...,NK4 angeschlossen Netzkunden repräsentierende Korrelationsmatrizen KM dargestellt. Die Korrelationsmatrix KM besteht aus den an das optische Kommunikationsnetz FOK angeschlossenen Netzknoten NK1,...,NK4, wobei für jeden Netzknoten NK1,...,NK4 jeweils eine Spalte und eine Zeile der Korrelationsmatrix KM vorgesehen ist. Dabei wird beispielsweise durch das einen binären Wert "0" aufweisende Element $a_{13}$ der Korrelationsmatrix KM, daß in der ersten Spalte und in der dritten Zeile angeordnet ist, zum Ausdruck gebracht, daß zwischen dem ersten und dem vierten Netzknoten NK1,NK4 keine logische Verbindung LV bzw. keine Datenverkehrsbeziehung geplant ist. Dagegen zeigt das in der ersten Spalte und in der zweiten Zeile befindliche, einen binären Wert "1" aufweisende Element $a_{12}$ der Korrelationsmatrix KM an, daß zwischen dem ersten und dem zweiten Netzknoten NK1,NK2 eine logische Verbindung LV bzw. eine Verkehrsbeziehung vorgesehen ist. Die auf der Hauptdiagonale der Korrelationsmatrix KM befindlichen Elemente $a_{11}, a_{22}, a_{33}, a_{44}$ ergeben sich aufgrund der symmetrischen Struktur der Korrelationsmatrix KM zu einen binären Wert "1" und werden bei einer späteren Auswertung der Korrelationsmatrix KM durch die Bewertungsroutine BR im weiteren nicht betrachtet. Die in Figur 3 dargestellte Korrelationsmatrix KM zeigt eine logische Verbindung LV zwischen dem ersten und dem zweiten, und dem dritten und dem vierten Netzknoten NK1,NK2 und NK3,NK4 eines Netzkunden an.

Die in Form der in Figur 3 dargestellten Korrelationsmatrix KM vorliegenden Datenverkehrsbeziehungsinformationen DJ und der Verbindungspfadabschnittsvektor D werden bei der Ausführung der Bewertungsroutine BR durch einem in der ersten Rechnereinheit RE1 vorgesehenen Prozessor P aus der Speichereinheit SE ausgelesen, wobei der Prozessor P an die Speichereinheit SE angeschlossen ist. Desweiteren wird zum Ermitteln der über den ersten "Sternpunkt"-Netzknoten S1 geführten Arbeits-Verbindungspfade WP und der über den zweiten "Sternpunkt"-Netzknoten S2 geführten Ersatz-Verbindungspfade PP für die jeweiligen logischen Verbindungen LV die Bewertungsroutine BR vom Prozessor P aus der Speichereinheit SE gelesen und ausgeführt, wobei zusätzlich mit Hilfe der Bewertungsroutine BR Verbindungspfadinformationen gebildet werden, anhand denen die Durchschaltung der logischen Verbindungen LV durch die optischen fernkonfigurierbaren ersten und zweiten optischen Durchschaltemittel DM1,DM2 durchgeführt wird.

In Figur 4 ist die durch den Prozessor P ausgeführte Bewertungsroutine BR in einem Ablaufdiagramm prinzipiell dargestellt. Zunächst werden durch den Prozessor P die Datenverkehrsbeziehungsinformationen DJ und der Verbindungspfadabschnittsvektor D aus der Speichereinheit SE gelesen und anschließend mögliche Verbindungspfadvektoren $V_{ij}$ gebildet, wobei die Reihenfolge und die Anzahl der zur Verfügung stehenden Verbindungsabschnitte D1,...,D14 durch den Verbindungspfadabschnittsvektor D festgelegt ist. Desweiteren wird der Verbindungspfadvektor $V_{ij}$ - beispielsweise des in Figur 2 strichliert dargestellten Arbeits-Verbindungspfades WP - jeweils aus zwei vom jeweiligen Netzknoten NK1,NK2 zum "Sternpunkt"-Netzknoten S1,S2 verlaufenden Verbindungspfaden gebildet, d.h. es wird zunächst ein erster Verbindungspfadvektor $DUV_{1,S1}$ zwischen dem ersten Netzknoten NK1 und dem ersten "Sternpunkt"-Netzknoten S1 und ein zweiter Verbindungspfadvektor $DUV_{2,S1}$ zwischen dem ersten "Sternpunkt"-Netzknoten S1 und dem zweiten Netzknoten NK2 gebildet und anschließend zu einem gemeinsamen Verbindungspfadvektor $V_{12A}$ nach der im Prozessor P implementierten nachfolgenden Formel zusammengefaßt:

$$V_{ij} = \quad DUV_{i,sx} + DUV_{j,sy} \qquad mit \quad i < j; i, j \neq 0$$

wobei

$DUV_{i,Sx}$     den Verbindungspfadvektor für einen den Sternpunkt-Netzknoten Sx und den i-ten Netzknoten verbindenden Verbindungspfad, und

$DUV_{j,Sy}$     den Verbindungspfadvektor für einen den Netzknoten Sy und den j-ten Netzknoten verbindenden Verbindungspfad

repräsentieren.

Ein möglicher Verbindungspfadvektor $V_{12A}$ für den in Figur 2 strichliert dargestellten Arbeits-Verbindungspfad WP ergibt sich somit zu:

$V_{12A}= (1,1,0,0,0,0,0,0,1,1,1,0,0,0)^T$ mit
$DUV_{1,S1}= (1, 1, 0, 0, 0, 0, 0, 0, 0, 0, 0, 0, 0, 0)^T$ und
$DUV_{2,S1}= (1,0,0,0,0,0,0,0,1,1,1,0,0,0)^T$.

Darin wird jedem Element des Verbindungspfadabschnittsvektors D, das einen für den Arbeits-Verbindungspfad WP benutzten Verbindungspfadabschnitt D1,D2,D9,D10,D11 repräsentiert, ein binären Wert "1" zugeordnet und den Elementen, die einen unbenutzten Verbindungspfadabschnitt D3,D4,D5,D6,D7,D8,D12,D13,D14 repräsentieren ein binärer Wert "0" zugeordnet. Analog dazu wird ein Verbindungspfadvektor $V_{12P}$ für den Ersatz-Verbindungspfad PP ermittelt, der in Figur 2 durch eine punktierte Linie dargestellt ist. Dieser ergibt sich zu:

$V_{12P}= (0,0,1,0,0,1,0,1,0,0,0,0,0,1)^T$ mit
$DUV_{1,S2}= (0,0,1,0,0,1,0,1,0,0,0,0,0,0)^T$ und
$DUV_{2,S2}= (0,0,0,0,0,0,0,0,0,0,0,0,0,1)^T$.

Nachdem für alle durch die Datenverkehrsbeziehungsinformation DJ gegebenen, geplanten logischen Verbindungen LV jeweils ein Arbeits-Verbindungspfad WP und ein Ersatz-Verbindungspfad PP in Form eines Verbindungspfadvektors $V_{ij}$ ermittelt wurde, wird zusätzlich eine Netzroutinginformation CJV gebildet, wobei beispielsweise zur Ermittlung der Netzroutinginformation CJV auf dem Prozessor P folgende Formel implementiert ist:

$$CJV = \sum_{i,j}^{N,N} a_{ij} \cdot (DUV_{i,Sx}) \cdot (DUV_{j,Sy})^T \qquad mit\ i < j; i, j \neq 0$$

wobei

CJV     die Netzroutinginformation,
i     eine erste Summationsvariable,
j     eine zweite Summationsvariable,
N     die Anzahl der Netzknoten im Kommunikationsnetz,
$a_{ij}$     das Element der i-ten Zeile und der j-ten Spalte der Korrelationsmatrix KM,
$DUV_{i,Sx}$     den Verbindungspfadvektor für einen den Sternpunkt-Netzknoten Sx und den i-ten Netzknoten verbindenden Verbindungspfad, und

DUV$_{j,Sy}$ den Verbindungspfadvektor für einen den Netzknoten Sy und den j-ten Netzknoten verbindenden Verbindungspfad

repräsentieren.

Wie im Ablaufdiagramm in Figur 4 dargestellt, wird der Wert der Netzroutinginformation CJV, der die Anzahl der sowohl beim Arbeits-Verbindungspfad WP als auch beim Ersatz-Verbindungspfad PP gemeinsam benutzten Verbindungspfadabschnitte D1,...,D14 für alle geplanten logischen Verbindungen LV innerhalb des fernkonfigurierbaren logischen Kommunikationsnetzes FOK anzeigt, ausgewertet, d.h. weist die Netzroutinginformation CJV einen Wert "0" auf, so können alle logischen Verbindungen LV durch einen Arbeits-Verbindungspfad WP und einen geographisch unterschiedlich geführten Ersatz-Verbindungspfad PP aufgebaut werden. Weist die Netzroutinginformation CJV einen Wert "0" auf, so werden durch den Prozessor P die anhand der Verbindungspfadvektoren DUV$_{i,Sx}$DUV$_{j,Sy}$ ermittelten Verbindungspfade V$_{ij}$ mit Hilfe der ersten und zweiten optischen Durchschaltemittel DM1,DM2 durchgeschaltet. Nimmt die Netzroutinginformation CJV einen Wert ungleich "0" an, der jedoch größer ist als ein zuvor festgelegter Wert "M", der eine maximale Anzahl von gemeinsam benutzten Verbindungspfadabschnitte D1,...,D14 für alle geplanten logischen Verbindungen LV innerhalb des fernkonfigurierbaren logischen Kommunikationsnetzes FOK festlegt, so werden wiederum durch den Prozessor P die ermittelten Verbindungspfade WP,PP mit Hilfe der ersten und zweiten optischen Durchschaltemittel DM1,DM2 durchgeschaltet.

Übersteigt der Wert der Netzroutinginformation CJV den Wert "M", so wird überprüft, ob eine Verbesserung der Netzroutinginformation CJV durch eine neue Ermittlung von Verbindungspfadvektoren DUV$_{i,Sx}$,DUV$_{j,Sy}$ noch möglich ist. Sind bereits alle Wahlmöglichkeiten von Verbindungspfadvektoren DU-V$_{i,Sx}$, DUV$_{j,Sy}$ innerhalb des zur Verfügung stehenden Verbindungspfadabschnittsvektors D erschöpft und deshalb keine Verbesserungen der Netzroutinginformation CJV mehr möglich, so wird in einem weiteren Schritt ein zusätzlicher Verbindungspfadabschnitt zu den im geplanten optischen Kommunikationsnetz FOK vorgesehenen Verbindungspfadabschnitten D1,...,D14, beispielsweise in Bezug auf die Figur 2 dargestellten Verbindungspfadabschnitte D1,...,D14 ein fünfzehnter Verbindungspfadabschnitt D15, zum Verbindungspfadabschnittsvektor D hinzugenommen Unter Berücksichtigung dieser neuen faseroptischen infrastrukturellen Voraussetzungen des Kommunikationsnetzes FOK werden wieder neue Verbindungspfadvektoren DU-V$_{i,Sx}$, DUV$_{j,Sy}$ berechnet. Die Bewertungsroutine BR wird solange ausgeführt bis eine Netzroutinginformation CJV ermittelt wurde, die die in Figur 4 dargestellten Bedingungen - Netzroutinginformation CJV = "0" oder Netzroutinginformation CJV < "M" - erfüllt.

Nach Durchschalten dieser durch gemeinsame Verbindungspfadvektoren repräsentierte Verbindungspfade V$_{ij}$ wird mit Hilfe der ersten und zweiten optischen Durchschaltemittel DM1,DM2 die Bewertungsroutine BR beendet. Das derartig fernkonfigurierte optische Kommunikationsnetz FOK weist solange unverändert die ermittelten und konfigurierten logischen Verbindungen LV auf bis sich Änderungen in den Datenverkehrsbeziehungen zwischen den jeweiligen Netzknoten NK1,...,NK4 ergeben oder weitere Netzknoten an das fernkonfigurierbare optische Kommunikationsnetz FOK angeschlossen werden.

**Patentansprüche**

1. Fernkonfigurierbares optisches Kommunikationsnetz (FOK) mit zumindest zwei "Sternpunkt"-Netzknoten (S1,S2) und mehreren jeweils an die zumindest zwei "Sternpunkt"-Netzknoten (S1,S2) über logische Verbindungen (LV) angeschlossenen Netzknoten (NK1,...,NK4),

   - bei dem logische Verbindungen (LV) durch festgelegte, jeweils zumindest einen Verbindungsabschnittspfad (D1,...,D14) enthaltende Verbindungspfade (WP,PP) realisiert sind,
   - bei dem für jede logische Verbindung (LV) ein über den "Sternpunkt"-Netzknoten (S1) geführter Arbeits-Verbindungspfad (WP) und ein geographisch unterschiedlicher, über den weiteren "Sternpunkt"-Netzknoten (S2) geführter Ersatz-Verbindungspfad (PP) realisiert ist, **dadurch gekennzeichnet,**
   - **dass** bei dem konkonfigurierbaren optischen Kommunikationsnetz optische Durchschaltemittel (DM1, DM2) zum Durchschalten der logischen Verbindungen (LV) jeweils über den Arbeits- und Ersatz-Verbindungspfad (WP,PP) zwischen den jeweiligen Netzknoten (NK1,NK2) in den "Sternpunkt"-Netzknoten (S1,S2) vorgesehenen sind, wobei die Durchschaltemittel (DM1,DM2) dafür ausgestaltet sind, die für die Hin-/Rückverbindungen vorgesehenen Verbindungspfade im "Sternpunkt"-Netzknoten neu zu konfigurieren und Verbindungspfade durchzuschalten oder wieder zu trennen.

2. Fernkonfigurierbares optisches Kommunikationsnetz nach Anspruch 1, **dadurch gekennzeichnet,**

**daß** eine Rechnereinheit (RE1,RE2)

- zum Bilden einer die erwartenden Datenverkehrsbeziehungen zwischen den einzelnen Netzknoten (NK1,..., NK4) repräsentierenden Datenverkehrsbeziehungsinformation (DJ),
- zum Ermitteln der über den "Sternpunkt"-Netzknoten (S1) geführten Arbeits-Verbindungspfade (WP),
- zum Ermitteln der geographisch unterschiedlich, über den weiteren "Sternpunkt"-Netzknoten (S2) geführten Ersatz-Verbindungspfade (PP),
- zum Bilden einer Verbindungspfadinformation vorgesehen ist.

3. Fernkonfigurierbares optisches Kommunikationsnetz nach Anspruch 1,
   **dadurch gekennzeichnet,**
   **daß** die optischen Durchschaltemittel (DM1,DM2) zum Durchschalten von logischen Verbindungen (LV) fernkonfigurierbar sind.

4. Fernkonfigurierbares optisches Kommunikationsnetz nach einem der Ansprüche 2 bis 3,
   **dadurch gekennzeichnet,**
   **daß** in der Rechnereinheit (RE1,RE2) die Datenverkehrsbeziehungsinformation (DJ) in Form einer "Korrelationsmatrix" (KM) realisiert ist, wobei bei einer zu erwartenden logischen Verbindung (LV) zwischen zwei Netzknoten (NK1,NK2) dieser logischen Verbindung (LV) ein den binären Wert "1" aufweisendes Matrixelement ($a_{12}$) und bei keiner zu erwartenden logischen Verbindung (LV) ein den binären Wert "0" aufweisendes Matrixelement ($a_{14}$) zugeordnet wird.

5. Fernkonfigurierbares optisches Kommunikationsnetz nach einem der Ansprüche 2 bis 4,
   **dadurch gekennzeichnet,**
   **daß** in der Rechnereinheit (RE1,RE2) ein einzelner über jeweils einen "Sternpunkt"-Netzknoten (S1,S2) geführter, aus zumindest einem Verbindungspfadabschnitt (D1,...,D14) bestehender Arbeits- oder Ersatz-Verbindungspfad (WP,PP) derartig durch einen Verbindungspfadvektor ($DUV_{i,Sx}$,$DUV_{j,Sy}$) repräsentiert wird,
   **daß** die Anzahl der Elemente des Verbindungspfadvektors ($DU\text{-}V_{i,Sx}$,$DUV_{j,Sy}$) durch die Anzahl der für die Konfiguration des Kommunikationsnetzes (FOK) zur Verfügung stehenden geographisch unterschiedlichen Verbindungspfadabschnitte (D1,...,D14) festgelegt ist,
   **daß** bei einem im Arbeits- oder Ersatz-Verbindungspfad (WP,PP) enthaltenen Verbindungspfadabschnitt (D1,..., D14) dem dem jeweiligen Verbindungspfadabschnitt zugeordneten Element des Verbindungspfadvektors ($DUV_{i,Sx}$, $DUV_{j,Sy}$) ein binärer Wert "1" und bei einem nicht im Verbindungspfad (WP,PP) enthaltener Verbindungspfadabschnitt (D1,...,D14) dem dem jeweiligen Verbindungspfadabschnitt (D1,...,D14) zugeordneten Element des Verbindungspfadvektors ($DUV_{i,Sx}$,$DUV_{j,Sy}$) ein binärer Wert "0" zugewiesen wird.

6. Fernkonfigurierbares optisches Kommunikationsnetz nach einem der Ansprüche 2 bis 5,
   **dadurch gekennzeichnet,**
   **daß** die in der Rechnereinheit (RE1,RE2) gebildete Verbindungspfadinformation als Skalarprodukt der den Arbeits- und Ersatz-Verbindungspfad (WP,PP) repräsentierenden Verbindungspfadvektoren ($DUV_{i,Sx}$,$DUV_{j,Sy}$) realisiert ist.

7. Fernkonfigurierbares optisches Kommunikationsnetz nach einem der Ansprüche 2 bis 6,
   **dadurch gekennzeichnet,**
   **daß** die Rechnereinheit (RE1,RE2) zum Zusammenfassen aller einzelnen Verbindungspfadinformationen der logischen Verbindung zwischen den Netzknoten (NK1,...,NK4) zu einer Netzroutinginformation (CJV) vorgesehen ist, wobei durch die Netzroutinginformation (CJV) die Anzahl der mehrfach für die logischen Verbindungen (LV) zwischen den einzelnen Netzknoten (NK1,...,NK4), benutzten Verbindungspfadabschnitten angezeigt wird.

8. Fernkonfigurierbares optisches Kommunikationsnetz nach Anspruch 7,
   **dadurch gekennzeichnet,**
   **daß** für die Berechnen der Netzroutinginformation (CJV) in der Rechnereinheit (RE1,RE2) folgende Formel benutzt wird:

$$CJV = \sum_{i,j}^{N,N} a_{ij} \cdot (DUV_{i,Sx}) \cdot (DUV_{j,Sy})^T \qquad mit\ i < j\,;\ i, j \neq 0$$

wobei

CJV die Netzroutinginformation,
i eine erste Summationsvariable,
j eine zweite Summationsvariable,
N die Anzahl der Netzknoten im Kommunikationsnetz,
$a_{ij}$ das Element der i-ten Zeile und der j-ten Spalte der Korrelationsmatrix (KM),
$DUV_{i,Sx}$ den Verbindungspfadvektor für einen den Sternpunkt-Netzknoten Sx und den i-ten Netzknoten verbindenden Verbindungspfad, und
$DUV_{j,Sy}$ den Verbindungspfadvektor für einen den Netzknoten Sy und den j-ten Netzknoten verbindenden Verbindungspfad

repräsentieren.

**9.** Fernkonfigurierbares optisches Kommunikationsnetz nach Anspruch 5,
**dadurch gekennzeichnet,**
**daß** zur Berechnung des Verbindungspfadvektors ($DUV_{i,Sx}$,$DUV_{j,Sy}$) für eine logische Verbindung (LV) zwischen einem i-ten und einem j-ten Netzknoten (NK1,...,NK4) in der Rechnereinheit (RE1,RE2) folgende Formel implementiert ist:

$$V_{ij} = DUV_{i,Sx} + DUV_{j,Sy} \qquad mit\ i < j;\quad i,j \neq 0$$

wobei

$DUV_{i,Sx}$ den Verbindungspfadvektor für einen den Sternpunkt-Netzknoten Sx und den i-ten Netzknoten verbindenden Verbindungspfad, und
$DUV_{j,Sy}$ den Verbindungspfadvektor für einen den Netzknoten Sy und den j-ten Netzknoten verbindenden Verbindungspfad

repräsentieren.

**10.** Fernkonfigurierbares optisches Kommunikationsnetz nach einem der Ansprüche 7 bis 9,
**dadurch gekennzeichnet,**
**daß** in der Rechnereinheit (RE1,RE2) für die Konfiguration des optischen Kommunikationsnetzes (FOK) für die durch die Netzroutinginformation (CJV) repräsentierte Anzahl der mehrfach für die logischen Verbindungen (LV) zwischen den einzelnen Netzknoten (NK1,...,NK4) benutzten Verbindungspfadabschnitten (D1,...,D14) eine maximale Anzahl (M) festgelegt werden kann.

**Claims**

**1.** Remotely configurable optical communication network (FOK), having at least two "star point" network nodes (S1, S2) and a plurality of network nodes (NK1, ..., NK4) connected respectively to the at least two "star point" network nodes (S1, S2) by way of logical connections (LV),

- wherein logical connections (LV) are realised by defined connection paths (WP, PP), each containing at least one connection segment path (D1, ..., D14),
- wherein a working connection path (WP) routed by way of the "star point" network node (S1) and a geographically different substitute connection path (PP) routed by way of the further "star point" network node (S2) is realised for each logical connection (LV),

**characterised in that**

- with the remotely configurable optical communication network optical through-switching means (DM1, DM2) are provided to switch through the logical connections (LV) respectively by way of the working connection path and substitute connection path (WP, PP) between the respective network nodes (NK1, NK2) in the "star point" network nodes (S1, S2), the through-switching means (DM1, DM2) being embodied to reconfigure the connection paths provided for the forward/return connections in the "star point" network node and to switch through connection paths or separate them again.

2. Remotely configurable optical communication network according to claim 1,
**characterised in that**
a computing unit (RE1, RE2) is provided

- to form an item of data traffic relation information (DJ) representing the expected data traffic relations between the individual network nodes (NK1, ..., NK4),
- to determine the working connection paths (WP) routed by way of the "star point" network node (S1),
- to determine the substitute connection paths (PP) routed in a geographically different fashion by way of the further "star point" network node (S2),
- to form an item of connection path information.

3. Remotely configurable optical communication network according to claim 1,
**characterised in that**
the optical through-switching means (DM1, DM2) can be configured remotely to switch through logical connections (LV).

4. Remotely configurable optical communication network according to one of claims 2 to 3,
**characterised in that**
in the computing unit (RE1, RE2) the data traffic relation information (DJ) is realised in the form of a correlation matrix (KM), with, if a logical connection (LV) is expected between two network nodes (NK1, NK2), a matrix element $(a_{12})$ having the binary value "1" being allocated to said logical connection (LV) and if no logical connection (LV) is expected, a matrix element $(a_{14})$ having the binary value "0" being allocated to said logical connection (LV).

5. Remotely configurable optical communication network according to one of claims 2 to 4,
**characterised in that** in the computing unit (RE1, RE2) a single working or substitute connection path (WP, PP) routed by way of a "star point" network node (S1, S2) in each instance and consisting of at least one connection path segment (D1, ..., D14) is represented by a connection path vector ($DUV_{i,Sx}$, $DUV_{j,Sy}$) in such a fashion that the number of elements of the connection path vector ($DUV_{i,Sx}$, $DUV_{j,Sy}$) is defined by the number of geographically different connection path segments (D1, ..., D14) that are available for configuration of the communication network (FOK) with a connection path segment (D1, ..., D14) contained in the working or substitute connection path (WP, PP), the element of the connection path vector ($DUV_{i,Sx}$, $DUV_{j,Sy}$) assigned to the respective connection path segment is assigned a binary value "1" and with a connection path segment (D1, ..., D14) not contained in the connection path (WP, PP), the element of the connection path vector ($DUV_{i,Sx}$, $DUV_{j,Sy}$) assigned to the respective connection path segment (D1, ..., D14) is assigned a binary value "0".

6. Remotely configurable optical communication network according to one of claims 2 to 5,
**characterised in that**
the connection path information formed in the computing means (RE1, RE2) is realised as a scalar product of the connection path vectors ($DUV_{i,Sx}$, $DUV_{j,Sy}$) representing the working connection path and substitute connection paths (WP, PP).

7. Remotely configurable optical communication network according to one of claims 2 to 6,
**characterised in that**
the computing unit (RE1, RE2) is provided to combine all of the individual items of connection path information of the logical connection between the network nodes (NK1, ..., NK4) to form an item of network routing information (CJV), with the network routing information (CJV) indicating the number of connection path segments that are used in a multiple fashion for the logical connections (LV) between the individual network nodes (NK1, ..., NK4) .

8. Remotely configurable optical communication network according to claim 7,
**characterised in that**
the computing unit (RE1, RE2) uses the following formula to calculate the network routing information (CJV):

$$CJV = \sum_{i,j}^{N,N} a_{ij} \cdot (DUV_{i,Sx}) \cdot (DUV_{j,Sy})^T \qquad with\ i < j\ ;\ i,j \neq 0$$

where

CJV represents the network routing information,

i represents a first summation variable,

j represents a second summation variable,

N represents the number of network nodes in the communication network,

$a_{ij}$ represents the element at the ith row and jth column of the correlation matrix KM,

$DUV_{i,Sx}$ represents the connection path vector for a connection path connecting the star point network node Sx and the ith network node, and

$DUV_{j,Sy}$ represents the connection path vector for a connection path connecting the network node Sy and the jth network node.

9. Remotely configurable optical communication network according to claim 5,
**characterised in that**
to calculate the connection path vector ($DUV_{i,Sx}$, $DUV_{j,Sy}$) for a logical connection (LV) between an ith and a jth network node (NK1, ..., NK2), the following formula is implemented in the computing unit (RE1, RE2):

$$V_{ij} = DUV_{i,Sx} + DUV_{j,Sy} \qquad with \quad i < j;\ i,j \neq 0$$

where

$DUV_{i,Sx}$ represents the connection path vector for a connection path connecting the star point network node Sx and the ith network node, and

$DUV_{j,Sy}$ represents the connection path vector for a connection path connecting the network node Sy and the jth network node.

10. Remotely configurable optical communication network according to one of claims 7 to 9,
**characterised in that**
in the computing unit (RE1, RE2) a maximum number (M) can be defined for the number of connection path segments (D1, ..., D14) used in a multiple fashion for the logical connections (LV) between the individual network nodes (NK1, ..., NK4) and represented by the network routing information (CJV), for configuring the optical communication network (FOK).

**Revendications**

1. Réseau de communication (FOK) optique configurable à distance comprenant au moins deux noeuds de réseau de "point étoile" (S1, S2) et plusieurs noeuds de réseau (NK1, ..., NK4) raccordés chacun aux au moins deux noeuds de réseau de "point étoile" (S1, S2) au moyen de liaisons (LV) logiques,
dans lequel des liaisons logiques (LV) sont réalisées par des chemins de liaison (WP, PP) définis, contenant chacun au moins un chemin de tronçon de liaison (D1, ..., D14),
dans lequel, pour chaque liaison (LV) logique, un chemin de liaison de travail (WP) guidé par le noeud de réseau de "point étoile" (S1) et un chemin de liaison de remplacement (PP) différent au plan géographique, guidé par l'autre noeud de réseau de "point étoile" (S2) sont réalisés, **caractérisé en ce que**, sur le noeud de réseau de communication optique configurable à distance, des moyens d'intercommunication (DM1, DM2) optiques sont prévus pour l'interconnexion des liaisons (LV) logiques respectivement par le chemin de liaison de travail et le chemin de liaison de remplacement (WP, PP) entre les noeuds de réseau (NK1, NK2) respectifs dans les noeuds de réseau de "point étoile" (S1, S2), les moyens d'intercommunication (DM1, DM2) étant conçus pour reconfigurer les chemins de liaison prévus pour les liaisons aller-retour dans le noeud de réseau de "point étoile" et interconnecter ou séparer à nouveau des chemins de liaison.

**2.** Réseau de communication optique configurable à distance selon la revendication 1, **caractérisé en ce qu'**une unité d'ordinateur (RE1, RE2) est prévue

- pour la formation d'une information du rapport du trafic de données (DJ) représentant les rapports de trafic de données en attente entre les noeuds de réseau (NK1, ..., NK4) individuels,
- pour déterminer les chemins de liaison de travail (WP) guidés par le noeud de réseau de "point étoile" (S1),
- pour déterminer les chemins de liaison de remplacement (PP) différents au plan géographique et guidés par l'autre noeud de réseau de "point étoile" (S2),
- pour former une information sur le chemin de liaison.

**3.** Réseau de communication optique configurable à distance selon la revendication 1, **caractérisé en ce que** les moyens d'intercommunication (DM1, DM2) optiques peuvent être configurés à distance pour l'interconnexion de liaisons (LV) logiques.

**4.** Réseau de communication optique configurable à distance selon l'une quelconque des revendications 2 à 3, **caractérisé en ce que**, dans l'unité d'ordinateur (RE1, RE2), l'information sur le rapport de trafic de données (DJ) est réalisée sous la forme d'une "matrice de corrélation" (KM), un élément de matrice ($a_{12}$) présentant la valeur binaire "1" étant attribuée dans le cas d'une liaison (LV) logique à escompter entre deux noeuds de réseau (NK1, NK2) de cette liaison (LV) logique et un élément de matrice ($a_{14}$) présentant la valeur binaire "0" étant attribuée en l'absence de liaison (LV) logique à escompter.

**5.** Réseau de communication optique configurable à distance selon l'une quelconque des revendications 2 à 4, **caractérisé en ce que**, dans l'unité d'ordinateur (RE1, RE2), un chemin de liaison de travail ou un chemin de liaison de remplacement (WP, PP) guidé au moyen de respectivement un noeud de réseau de "point étoile" (S1, S2) et constitué d'au moins un tronçon de chemin de liaison (D1, ..., D14) est représenté par un vecteur de chemin de liaison ($DUV_{i,Sx}$, $DUV_{j,Sy}$) de telle sorte que le nombre des éléments du vecteur de chemin de liaison ($DUV_{i,Sx}$, $DUV_{j,Sy}$) est défini par le nombre des tronçons de chemin de liaison différents au plan géographique et mis à disposition pour la configuration du réseau de communication (FOK), **en ce que**, dans le cas d'un tronçon de chemin de liaison (D1,..., D14) inclus dans le chemin de liaison de travail ou le chemin de liaison de remplacement (WP, PP) une valeur binaire "1" est attribuée à l'élément, attribué au tronçon de chemin de liaison respectif, du vecteur de chemin de liaison ($DUV_{i,Sx}$, $DUV_{j,Sy}$) et, dans le cas d'un tronçon de chemin de liaison (D1, ..., D14) inclus dans le chemin de liaison (WP, PP), une valeur binaire "0" est attribuée à l'élément, attribué au tronçon de chemin de liaison (D1,..., D14) respectif, du vecteur de chemin de liaison ($DUV_{i,Sx}$, $DUV_{j,Sy}$).

**6.** Réseau de communication optique configurable à distance selon l'une quelconque des revendications 2 à 5, **caractérisé en ce que** l'information sur le chemin de liaison, formée dans l'unité d'ordinateur (RE1, RE2), est réalisée comme le produit scalaire des vecteurs de chemin de liaison ($DUV_{i,Sx}$, $DUV_{j,Sy}$) représentant le chemin de liaison de travail et le chemin de liaison de remplacement (WP, PP).

**7.** Réseau de communication optique configurable à distance selon l'une quelconque des revendications 2 à 6, **caractérisé en ce que** l'unité d'ordinateur (RE1, RE2) est prévue pour le regroupement de toutes les informations individuelles sur le chemin de liaison des liaisons logiques entre les noeuds de réseau (NK1, ..., NK4) en une information sur le routage du réseau (CJV), le nombre des tronçons de chemin de liaison utilisés plusieurs fois pour les liaisons (LV) logiques entre les noeuds de réseau (NK1, ... , NK4) individuels étant indiqué par l'information sur le routage du réseau (CJV).

**8.** Réseau de communication optique configurable à distance selon la revendication 7, **caractérisé en ce que** la formule suivante est utilisée pour le calcul de l'information sur le routage de réseau (CJV) dans l'unité d'ordinateur (RE1, RE2),

$$CJV = \sum_{i,j}^{N,N} a_{ij} \cdot (DUV_{i,Sx}) \cdot (DUV_{j,Sy})^T \quad \texttt{avec i < j ; i, j} \neq \texttt{0}$$

sachant que dans cette formule

CJV représente l'information sur le routage du réseau,
i une première variable de totalisation,
j une seconde variable de totalisation,
N le nombre des noeuds de réseau dans le réseau de communication,
$a_{ij}$ l'élément de la i-ème ligne et de la j-ième colonne de la matrice de corrélation KM,
$DUV_{i,Sx}$ le vecteur de chemin de liaison pour un chemin de liaison reliant le noeud de réseau de point étoile Sx et le i-ième noeud de réseau,
$DUV_{j,Sy}$ le vecteur de chemin de liaison pour un chemin de liaison reliant le noeud de réseau Sy et le j-ième noeud de réseau.

9. Réseau de communication optique configurable à distance selon la revendication 5, **caractérisé en ce que**, pour le calcul du vecteur de chemin de liaison ($DUV_{i,Sx}$, $DUV_{j,Sy}$) pour une liaison (LV) logique entre un i-ème et un j-ème noeuds de réseau (NK1, ..., NK4), la formule suivante est mise en place dans l'unité d'ordinateur (RE1, RE2) :

$$V_{ij} = DUV_{i,Sx} + DUV_{j,Sy} \qquad \text{avec } i < j \ ; \ i, j \neq 0$$

sachant que dans cette formule

$DUV_{i,Sx}$ représente le vecteur de chemin de liaison pour un chemin de liaison reliant le noeud de réseau de point étoile Sx et le i-ème noeud de réseau et
$DUV_{j,Sy}$ le vecteur de chemin de liaison pour un chemin de liaison reliant le noeud de réseau Sy et le j-ième noeud de réseau.

10. Réseau de communication optique configurable à distance selon l'une quelconque des revendications 7 à 9, **caractérisé en ce que**, dans l'unité de calcul (RE1, RE2), un nombre (M) maximum peut être défini pour la configuration du réseau de communication (FOK) optique pour le nombre, présenté par l'information sur le routage de réseau (CJV), des tronçons de chemin de liaison (D1, ..., D14) utilisés plusieurs fois pour les liaisons (LV) logiques entre les noeuds de réseau (NK1, ..., NK14) individuels.

**FIG 1**

**FIG 3**

|  | NK1 | NK2 | NK3 | NK4 |
|---|---|---|---|---|
| NK1 | 1 | 1 | 0 | 0 |
| NK2 | 1 | 1 | 0 | 0 |
| NK3 | 0 | 0 | 1 | 1 |
| NK4 | 0 | 0 | 1 | 1 |

**KM**

$a_{12}$

$a_{14}$

FIG 2

## FIG 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- XP 010083929
- XP 010220371

- DE 19648073

**In der Beschreibung aufgeführte Nicht-Patentliteratur**

- **CONLISK J K.** Topology and survivability of future transport networks. *GLOBECOM 89, IEEE GLOBAL TELECOMMUNICATIONS CONFERENCE AND EXHIBITION,* 27. November 1989, 826-834

- **BERTHELON L et al.** Towards photonic networking: Experimental demonstration of a reconfigurable survivable WDM ring network. *GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18. November 1996,* 18. November 1996, 311-315